# EUROPEAN PATENT SPECIFICATION

(11) **EP 4 087 194 B1**
(45) Date of publication and mention of the grant of the patent: **04.02.2026**
(21) Application number: 20910169.0
(22) Date of filing: 01.12.2020
(51) Int. Cl.: H04L 12/46

(54) **DATA FORWARDING METHOD, FORWARDING DEVICE, SYSTEM, SERVER, AND STORAGE MEDIUM**
VERFAHREN, VORRICHTUNG, SYSTEM, SERVER ZUR WEITERLEITUNG VON DATEN UND SPEICHERMEDIUM
PROCEDE DE TRANSFERT DE DONNEES, DISPOSITIF, SYSTEME, SERVEUR DE TRANSFERT ET SUPPORT D'ENREGISTREMENT

(30) Priority: 30.12.2019 CN 201911396100
(43) Date of publication of application: 09.11.2022
(73) Proprietor: ZTE Corporation, Shenzhen, Guangdong 518057 (CN)
(72) Inventor: LIU, Xiaofei, Shenzhen, Guangdong 518057 (CN); XI, Yuanyuan, Shenzhen, Guangdong 518057 (CN)
(74) Representative: Deambrogi, Edgardo
(86) International application number: PCT/CN2020/133149
(87) International publication number: WO 2021/135792

(56) References cited:
- CN-A- 104 954 274
- CN-A- 105 407 056
- CN-A- 108 092 923
- CN-A- 108 463 989
- US-A1- 2018 359 323
- US-B1- 10 411 985
- US-B1- 9 774 824
- US-B2- 10 218 616

## Description

### Cross-Reference to Related Application

The present disclosure is the national stage filing of PCT Application No PCT/2020/133149 filed on December 01, 2020, which claims the priority of Chinese Application 201911396100.X, filed in the Chinese Patent Office on December 30, 2019, and entitled " DATA FORWARDING METHOD, FORWARDER, SYSTEM, SERVER AND STORAGE MEDIUM".

### Technical Field

Embodiments of the present disclosure relate to the field of communications technologies, and in particular, to a data forwarding method, a forwarder, a system, a server, and a storage medium.

### Background

Service Function Chain (SFC) means that a network operator usually needs to use a set of ordered Service Function (SF) when providing network access for a terminal user, for example, firewall, packet filtering, load balancing, and transmission proxy. An SFC service chain may be implemented by selecting a Service Function Path (SFP) formed by a specific service function on a specific network node, as can be seen in document US 2018/359323 A1.

In an SFC architecture, if a physical switch is used to send packet data to an execution end corresponding to each service function, networking costs will be increased.

### Summary

Embodiments of the present disclosure provide a data forwarding method, a forwarder, a system, a server, and a storage medium, which can reduce a problem of data forwarding cost and improve data forwarding performance. The invention is defined in independent method claim 1, in independent apparatus claim 6, in independent apparatus claim 9, and in independent computer product claim 10.

According to a first aspect, an embodiment of the present disclosure provides a data forwarding method according to claim 1.

According to a second aspect, an embodiment of the present disclosure provides a data forwarder according to claim 6.

According to a third aspect, an embodiment of the present disclosure provides a data forwarding system according to claim 7.

According to a fourth aspect, an embodiment of the present disclosure provides a data forwarding server according to claim 9.

According to a fifth aspect, an embodiment of the present disclosure provides a computer readable storage medium according to claim 10.

### Brief Description of the Drawings

The accompanying drawings are used to provide further understanding of the present disclosure and constitute a part of the description, and are used to explain the present disclosure together with the following specific embodiments, but are not intended to limit the present disclosure.
Fig. 1 shows a schematic diagram of a service chain forwarding architecture according to an embodiment.
Fig. 2 shows a schematic diagram of a data forwarding architecture of a network adapter that uses an SR-IOV technology.
Fig. 3 is a flowchart illustrating a data forwarding method according to an embodiment of the present disclosure.
Fig. 4 shows a schematic diagram of a service chain forwarding architecture according to an embodiment of the present disclosure.
Fig. 5 shows a schematic flowchart of packet data processing of an ingress service chain classifier according to an embodiment of the present disclosure.
Fig. 6 shows a processing flowchart of setting a virtual local area network for a virtual network adapter according to an embodiment of the present disclosure.
Fig. 7 shows a routing and forwarding process of a service chain according to an embodiment of the present disclosure.
Fig. 8 is a schematic flowchart of a data forwarding processing in an SR-IOV network adapter according to an embodiment of the present disclosure.
Fig. 9 is a flowchart of forwarding packet data according to an embodiment of the present invention.
Fig. 10 is a schematic flowchart of forwarding packet data according to another embodiment.
Fig. 11 is a schematic flowchart of a procedure of processing an egress service chain classifier according to an embodiment of the present disclosure.
Fig. 12 shows a schematic structural diagram of a data forwarder according to an embodiment of the present disclosure.
Fig. 13 shows a structural diagram of an exemplary hardware architecture of a computing device on which the data forwarding method and apparatus according to embodiments of the present disclosure may be implemented.

### Detailed Description of the Embodiments

Specific implementations of the present disclosure will be described below in detail with reference to the accompanying drawings. It should be understood that the embodiments described herein are only used to illustrate and explain the present disclosure, but not used to limit the present disclosure. For those skilled in the art, the present disclosure may be practiced without some of these specific details. The description of the embodiments below is intended merely to provide a better understanding of the disclosure by illustrating examples of the disclosure.

It should be noted that, in this description, the terms "include", "comprise", or any other variation thereof are intended to cover a non-exclusive inclusion, so that a process, method, article, or device that includes a series of elements not only includes those elements, but also includes other elements that are not explicitly listed, or further includes inherent elements of the process, method, article, or device. Without more limitations, the elements defined by the sentence "include..." do not exclude other same elements existing in the process, method, article, or device that includes the elements.

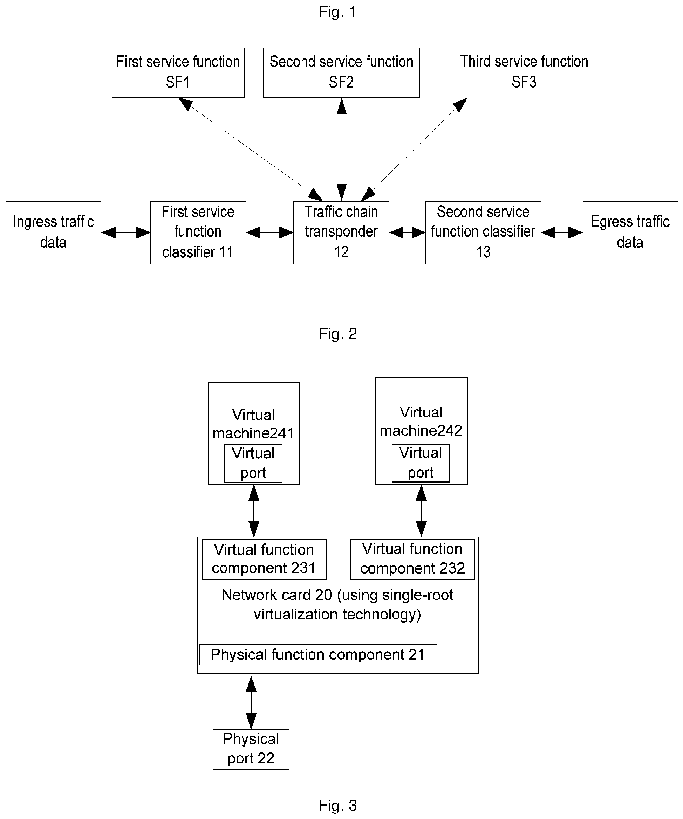

Fig. 1 shows a schematic diagram of a service chain forwarding architecture according to an embodiment. As shown in Fig. 1, in one embodiment, the SFC architecture includes: a first service function classifier 11, a Service Function Forwarder (SFF) 12, a second service function classifier 13, and a plurality of SFs, for example, a first service function SF1, a second service function SF2, and a third service function SF3.

In an embodiment, the SFC may add a Service Function Path Identifier (SFPID) for a service function path of each SFC.

The first service function classifier 11 may assign different SFCs to user data packets of different levels according to service traffic characteristics for user data packet classification, that is, the service functions to be passed by the user data packets may be determined by the SFCs. As an example, the user data packet may be packet data.

The service chain forwarder 12 may forward a corresponding user data packet according to the SFPID of the SFC, so as to implement different service chain processing for user data packets of different service traffic characteristics, thereby implementing differential requirements.

Specifically, the service chain forwarder 12 may add, according to the classification result of the first service function classifier 11, a SFC-header of a subsequent service link path to user data packets in each classification, so that each user data packet enters a corresponding service chain.

As an example, first, the service chain forwarder 12 may send, according to an SFC-header carried in a user data packet, the user data packet to a first service function SF1 in a service link path, and after the first service function SF1 completes service processing, the first service function SF1 sends the user data packet to a first service function classifier 11; secondly, the first service function classifier 11 sends a user data message to a second service function SF2 in a service link path according to the SFC-header, and after the second service function SF2 completes service processing, the second service function SF2 sends the user data message to the first service function classifier 11; again, the first service function classifier 11 sends the user data packet to the third service function SF3 in the service link path according to the SFC-header, and after the third service function SF3 completes service processing, the third service function SF3 sends the user data packet to the first service function classifier 11; then, the first service function classifier 11 sends the user data packet to the second service chain classifier 13.

The second service chain classifier 13 may be configured to delete the SFC-header of the user data message, obtain the user data message to which no SFC-header is added, and complete a forwarding process of the service chain.

In some application scene, the mode for implementing SFC-header generally needs to extend the existing protocol, for example, extend the reserved field of the header in the existing network protocol; or redefining the header encapsulation format, e.g., specifically designed for SFC. The two modes usually need to extend or change the report header format in the existing protocol, which needs the support of the vendor of the service function node. If the existing protocol is extended or redefined, the entire industry chain in the industry needs to be promoted for recognition and support, and the resource cost is huge.

In some application scene, when an SFC function is added to an existing network, if the existing network does not support the SFC function, it is necessary to add support for the SFC through software upgrading on a physical switch or a virtual switch of the existing network, or to directly replace a device. If the device cannot be upgraded smoothly, deployment and application of the SFC will be very difficult.

In some application scene, an actual device responsible for a service chain forwarding function may be a physical or virtual switch. Using a physical switch for networking is complex, which increases networking costs. Using a virtual switch often makes forwarding performance difficult to meet requirements.

In the embodiments of the present disclosure, a Single Root Input/Output Virtualization (SR-IOV) technology may be used to implement sharing between input devices and output devices in a virtualization environment. Fig. 2 shows a schematic diagram of a data forwarding architecture of a network adapter that uses an SR-IOV technology.

As shown in Fig. 2, the architecture may include a network card 20 adopting an SR-IOV technology, a Physical Function (PF) component 21, a physical port 22, a plurality of Virtual Function (VF) components, for example, a VF component 231 and a VF component 232, and a Virtual Machine (VM), for example, a virtual machine 241 and a virtual machine 242.

The PF component 21 may be configured to configure and manage all the VF components. The PF component 21 includes all bus and peripheral component interconnect express (PCle) functional components. The VF component is a lightweight PCle functional component lacking a configuration resource function. The corresponding PF component may be directly accessed through the PF driver, and the PF driver is a real device driver, for example, a PCIe device driver.

With continued reference to Fig. 1, a network card using an SR-IOV technology (hereinafter may be referred to as an SR-IOV network card for short) may create a plurality of VF components by using one PF component 21, where each VF component may be independently allocated to one virtual machine. For example, in Fig. 1, a virtual machine 241 may be assigned to VF component 231 and a virtual machine 242 may be assigned to VF component 232.

Each virtual machine may directly perform data communication with a corresponding VF component by using a VF driver, and an SR-IOV network adapter, as a network adapter supporting a virtualization technology, may allocate different corresponding VF network adapters to each virtual machine. That is to say, the SR-IOV technology is to establish a plurality of virtual input/output channels on a physical network adapter, so that the plurality of virtual input/output channels can be directly corresponding to virtual network adapters of a plurality of virtual machines on a one-to-one basis, thereby improving data forwarding efficiency with the plurality of virtual machines.

The SR-IOV network adapter in the embodiment of the present disclosure may have a built-in switch function, and by setting a Virtual Local Area Network (VLAN) of the VF component, packet data can be sent and received between different local area networks.

Because an SR-IOV network adapter has low costs and good forwarding performance, and a common network adapter used currently generally supports an SR-IOV technology, service chain orchestration may be implemented based on the SR-IOV network adapter in the embodiment of the present invention.

In the embodiment of the present disclosure, service chain orchestration may be understood as processing a service function in a service chain according to a service processing sequence required by a user, so as to implement service stream processing of the service function. As an example, the service functions in the service chain may include virtual network functions such as firewall, packet filtering, load balancing, and transport agent.

For a better understanding of the present disclosure, a data forwarding method, a forwarder, a system, a server, and a storage medium according to embodiments of the present disclosure are described in detail in the following with reference to the accompanying drawings. It should be noted that these embodiments are not intended to limit the scope of the present disclosure.

Fig. 3 is a flowchart illustrating a data forwarding method according to an embodiment of the present disclosure. As shown in Fig. 3, the data forwarding method in the embodiment of the present disclosure may include the following steps.

S110, determine, according to one or more service functions corresponding to the packet data, a service execution end corresponding to each service function.

S120, establishing a network connection for each service execution end, wherein the established network connection is used for performing data interaction with a corresponding service execution end, and the network connection established for each service execution end is a virtual network connection established by means of the same physical network card.

S130, forwarding, based on a predetermined service function processing sequence, the packet data to each service execution end through the network connection established for each service execution end.

According to the data forwarding method in the embodiments of the present disclosure, after a service execution end of a service function corresponding to each service function is determined, a network connection is established with each service execution end, wherein each established network connection may be a virtual network connection established based on the same physical network card; and based on a service function processing sequence, packet data is sent to the corresponding service execution end through each established virtual network connection, so as to implement the corresponding service function.

The service execution end in the embodiment of the present disclosure may be a preset virtual machine, that is, a corresponding service function may be implemented by using a virtual machine, and a virtual network connection is established with each virtual machine by allocating a virtual network card to each virtual machine.

In the embodiments of the present invention, a network connection established with each service execution end uses a virtual network created by the same physical network card, and an input/output channel to a corresponding service execution end can be directly established by using the virtual network, so that data forwarding efficiency can be improved by using the virtual network. Meanwhile, networking is simple, and a networking cost when a physical switch is used to send packet data to each service execution end is reduced.

In an embodiment, the packet data in step S110 may be packet data received from a network that does not support an SFC function through a physical port, and after completing a corresponding service function, the packet data may be forwarded to the network that does not support the SFC function through the physical port.

The data forwarding method according to the present disclosure can be coupled to an existing network which does not support an SFC function, and can realize a service forwarding function of packet data without changing software used in the existing network and without changing an existing network structure. Therefore, the problem that software cannot be smoothly upgraded due to software upgrading in order to support an SFC function in an existing network can be solved, and the problems of service function deployment and application difficulties caused by direct replacement of devices in an existing network can be solved.

In an embodiment, in step S120, the network connections established for each service execution end include a first network connection and a second network connection.

In this embodiment, a first network connection may be used to send data to a corresponding service execution end, and a second network connection may be used to receive data from a corresponding service execution end, so that when data needs to be sent or received, data interaction is directly performed with a virtual machine by using a corresponding virtual network card without first parsing a data transmission direction, thereby further improving data forwarding efficiency.

In one embodiment, the above step S130 may specifically comprise: S131, determining a current service function to be executed on the packet data, and sending the packet data to a port of the first network connection of the service execution end corresponding to the current service function; S132, receiving, through a port of the second network connection of the service execution end corresponding to the current service function, packet data for which the current service function has been executed; S133, determining a next service function acquired according to the service function processing sequence as a current service function to be executed on the packet data, until the number of times of sending the packet data is equal to the number of the one or more service functions.

In one embodiment, the packet data carries label information. In this embodiment, step S131 may include the following steps.

S131-01, setting different tag information for two network connections of each service execution end, and setting the second network connection of the service execution end corresponding to the current service function and the first network connection of the service execution end corresponding to the next service function to have the same label information.

S131-02, determining, according to the label information carried in the packet data, the current service function to be executed on the packet data, wherein the label information of the first network connection of the service execution end corresponding to the current service function is the same as the label information carried in the packet data.

S131-03, sending the packet data to the port of the first network connection of the service execution end corresponding to the current service function.

In an embodiment, the label information carried in the packet data is a virtual local area network label based on a designated virtual local area network protocol (hereinafter may be referred to as VLAN label for short).

The virtual local area network protocol may be a protocol conforming to anInstitute of Electrical and Electronic Engineers (IEEE) 802.1Q standard description (or 802.1Q for short). When tag information based on the 802.1Q standard description is added to a data packet, neither any special field needs to be added to the packet nor a header format needs to be redefined, and therefore, the virtual local area network protocol may be widely applied, and a lot of resources and costs are saved.

In one embodiment, after the step of sending the packet data to the port of the first network connection of the service execution terminal corresponding to the current service function, the method can further comprise: deleting, at the port of the first network connection, the label information carried in the packet data; sending the packet data from which the tag information has been deleted to a service execution end corresponding to the current service function.

In this embodiment, the port connected to the first network restores the original packet by deleting the label information carried in the packet data, and sends the original packet to the corresponding service execution end to implement the corresponding service function.

In an embodiment, each network connection is provided with label information, and after S132, the method can further comprise: adding, by using a port of a second network connection, label information to packet data on which a current service function has been executed, wherein the added label is the same as label information about a first network connection of a service execution end corresponding to a next service function.

In this embodiment, the port connected to the second network receives the data packet that is sent by the service execution end after completing the corresponding service function and does not include the label information, and adds the label information to the data packet, where the added label information may be used to determine the port connected to the next network for data forwarding.

In an embodiment, the step of adding label information to packet data on which the current service function has been executed may specifically comprise: adding the label information to a specified location of a packet header of the packet data based on a specified virtual local area network protocol.

Through the data forwarding method described in the foregoing embodiment, the packet data may be sequentially forwarded to the service execution end corresponding to each service function corresponding to the data packet.

In this embodiment, the packet data carrying the VLAN label is sent to the specified physical port. After receiving the packet data, the designated physical port deletes the VLAN tag carried in the packet data processed by the last service function to obtain original packet data without adding a VLAN tag, thereby completing the arrangement process of service functions corresponding to the whole packet data.

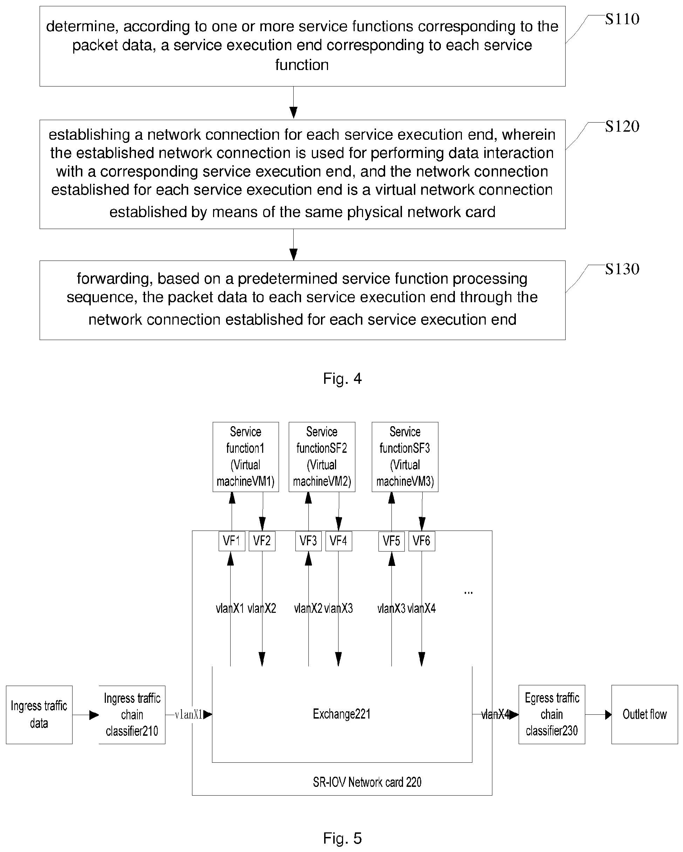

In the embodiments of the present disclosure, one or more service functions corresponding to the packet data may be implemented as a service chain corresponding to the packet data. The following describes some exemplary data forwarding methods of the present disclosure with reference to Fig. 4 to Fig. 11. Fig. 4 shows a schematic diagram of a service chain forwarding architecture according to an embodiment of the present disclosure.

As shown in Fig. 4, the architecture may include: an ingress service chain classifier 210, an SR-IOV network adapter 220, an egress service chain classifier 230, and a virtual machine corresponding to each service function in a service chain, for example, a virtual machine VM1, a virtual machine VM2, and a virtual machine VM3.

The virtual machine VM1, the virtual machine VM2 and the virtual machine VM3 are configured to implement a service function SF1, a service function SF2 and a service function SF3 in a service chain respectively.

The SR-IOV network adapter 220 may include a switch 221 and a plurality of VFs. The plurality of VFs may include, for example, a virtual network adapter VF1, a virtual network adapter VF2, a virtual network adapter VF3, a virtual network adapter VF4, a virtual network adapter VF5, and a virtual network adapter VF6.

In the SFC forwarding architecture based on the SR-IOV network adapter in the embodiment of the present disclosure, the SR-IOV is used as a Virtual Switch (vSwitch), and the virtual switch is used to implement a service chain forwarding function.

The data forwarding method shown in Fig. 4 may include the following steps.

Firstly, a service link is matched for the user data message and a VLAN tag is added.

In an embodiment, the step of matching the user data message with the service chain may comprise: the ingress service chain classifier 210 receives the user data message, classifies the user data message based on the traffic characteristic of the user data message, and matches the packet data in each classification with the corresponding SFC service chain.

In an embodiment, the ingress service chain classifier 210 may use the user data packet as ingress traffic, and may receive the user data packet using a common network in a non-SFC application scenario.

In an embodiment, the step of adding a VLAN tag may comprise: the ingress traffic chain classifier 210 adds a VLAN tag to the packet data in each classification.

In an actual networking application scenario, the architecture may include a plurality of SR-IOV network adapters connected in series, and each SR-IOV network adapter is configured to implement a service chain forwarding function corresponding to a category of user packet data. That is to say, the architecture may be implemented as a plurality of service chain forwarders connected in series. For ease of description, in one or more embodiments described herein, only a service chain forwarding process implemented by one SR-IOV network adapter is described. It should be understood that the service chain forwarding process corresponding to each category of user packet data is the same as or equivalent to the service chain forwarding process described in conjunction with Fig. 4, and will not be repeated in the embodiment of the present disclosure.

Secondly, the forwarding of the service link is implemented based on the VLAN label pair.

In this step, a virtual local area network of each virtual network card in the SR-IOV network card may be set, two virtual network cards are allocated to each virtual machine, a corresponding VLAN label is set at a port of each virtual network card to form a VLAN label pair, and a service chain may be presented by using a plurality of VLAN label pairs.

As shown in Fig. 4, service functions SF1, SF2 and SF3 in the service chain correspond to a virtual machine VM1, a virtual machine VM2 and a virtual machine VM3.

The VLAN tag pair may be represented as: [{'vlanX1':'vlanX2'}, {'vlanX2':'vlanX3'}, {'vlanX3':'vlanX4'}, ......, {'vlanXi':'vlanXi+1'}, ......, {'vlanXn-1':'vlanXn'}]. The value of Xi may be taken from 1 to 4094.

Exemplarily, {'vlanX1','vlanX2'} is taken as a VLAN tag pair, in which a first VLAN tag vlanX1 corresponds to one virtual network card (corresponding to an input port of a virtual local area network) of a virtual machine VM1, and a second VLAN tag vlanX2 corresponds to the other virtual network card (corresponding to an output port of the virtual local area network) of the virtual machine VM1. The switch 221 built in the SR-IOV network adapter may be used to complete packet forwarding between different virtual local area networks.

Referring to Fig. 4, a label pair used by each service function in a service chain forms a plurality of VLAN label pairs, the plurality of label pairs form a label pair chain, vlanX1 is a head of the whole label pair chain, and vlanX4 is a tail of the label pair chain, so that each group of label pair chain can implement forwarding of a corresponding service chain.

Specifically, because the first label in the label pair corresponding to the virtual network interface card VF1 is equal to vlanX1, the virtual network interface card SR-IOV sends the packet data carrying the VLAN label vlanX1 to the virtual network interface card VF1 corresponding to the VLAN label vlanX1.

The virtual network card VF1 receives packet data carrying a VLAN tag vlanX1, deletes the VLAN tag vlanX1 used for indicating a service chain, obtains original packet data, and sends the original packet data to the virtual machine VM1.

After completing the corresponding service function SF1, the virtual machine VM1 forwards the original packet data to the virtual network adapter VF2, and the virtual network adapter VF2 adds a VLAN tag vlanX2 (a second tag in the tag pair corresponding to VF1) to the received original packet data.

Because the first label in the label pair corresponding to the virtual network adapter VF3 is equal to vlanX2, the virtual network adapter SR-IOV sends the packet data carrying the VLAN label vlanX2 to the virtual network adapter VF3 corresponding to the VLAN label vlanX2, and continues the foregoing packet data forwarding process until the virtual network adapter VF6 adds the VLAN label vlanX4 to the received original packet data, and sends the data packet carrying the VLAN label vlanX4 to the egress service chain classifier 230.

Then, the egress service chain classifier restores the data packet and forwards the data.

In this step, after receiving the data packet that carries the VLAN label vlanX4 and is sent by the SR-IOV network adapter, the service chain classifier 230 deletes the VLAN label vlanX4 that identifies the service chain, and obtains the original data packet. The service chain classifier 230 may continue to forward data, thereby completing orchestration and forwarding of the service chain.

Fig. 5 shows a schematic flowchart of packet data processing of an ingress service chain classifier according to an embodiment of the present disclosure. As shown in Fig. 5, packet data processing of the ingress service chain classifier may include the following steps.

S301, receive user packet data.

In this step, the received user packet data may be packet data received from a network that does not provide a service chain function.

S302, identifying different types of service data packets in the user packet data according to the packet feature.

In this step, the user packet data may be stream classified, that is, classified according to the traffic characteristics, to obtain service data packets of different types.

S303, add a VLAN tag to each service data packet by means of flow classification.

In this step, a service chain identifier based on an 802.1Q standard VLAN tag may be added to different service data packets. As an example, a service chain identifier of the VLAN label may be encapsulated in each service packet.

S304, send the service data packet carrying the VLAN label to an SR-IOV network adapter for service chain forwarding.

In this step, the ingress service chain classifier may use the user data message as ingress traffic data, receive the data message from the non-SFC network, and perform flow classification on the message based on the user data message characteristics to match the corresponding SFC service chain.

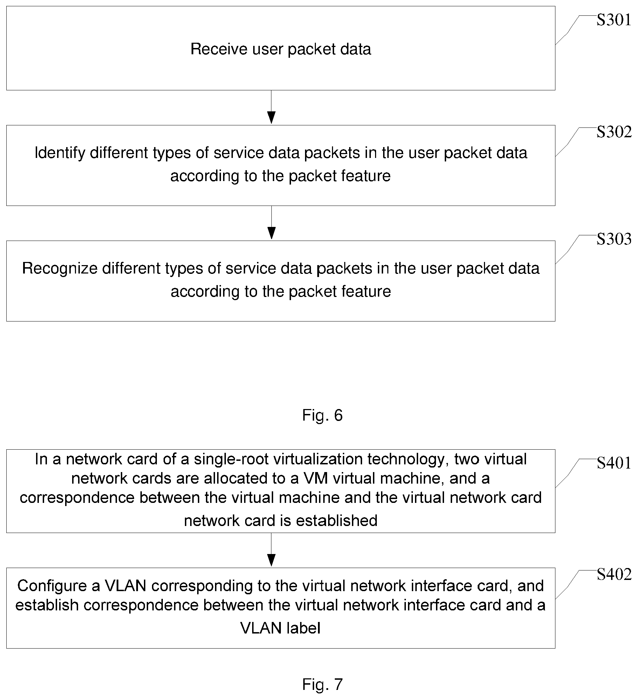

Fig. 6 shows a processing flowchart of setting a virtual local area network for a virtual network adapter according to an embodiment of the present disclosure. As shown in Fig. 6, the process of setting a virtual local area network for a virtual network adapter may include the following steps.

S401, in the SR-IOV network adapter, two virtual network adapters are allocated to one VM virtual machine, and a correspondence between the virtual machine and the virtual network adapter is established.

S402, in the SR-IOV network adapter, configure a VLAN corresponding to the virtual network adapter, and establish correspondence between the virtual network adapter and a VLAN label.

In this embodiment, a virtual local area network of each virtual network card in an SR-IOV network adapter may be set, correspondence between a VM virtual machine and two allocated virtual network cards is established, and correspondence between each virtual network card and a VLAN tag in a VLAN tag pair is established, so as to be used in a subsequent service chain forwarding process.

Fig. 7 shows a routing and forwarding process of a service chain according to an embodiment of the present disclosure. As shown in Fig. 7, the process of arranging and forwarding a service chain may include the following steps.

S501, two virtual network interface cards are allocated to each virtual machine.

S502, set a different VLAN label for each virtual network interface card.

S503, set the second VLAN tag in the VLAN tag pair used by the first service function to be the same as the first VLAN tag in the VLAN tag pair used by the next service function, and so on, until the VLAN tag pair used by the last service function is set completely.

S504, forming a plurality of VLAN tag pairs by using VLAN tag pairs used by each service function, and forming a VLAN tag pair chain (vlan-pair-chain) by using the plurality of VLAN tag pairs.

S505, forwarding the service chain in the chain by using the VLAN label, so as to implement orchestration forwarding of the SFC service chain.

In this embodiment, different VLAN tags based on the 802.1Q standard can be set for each VF port, so as to form a VLAN TAG pair, and a service chain forwarding order is presented by using such a series of tag pairs.

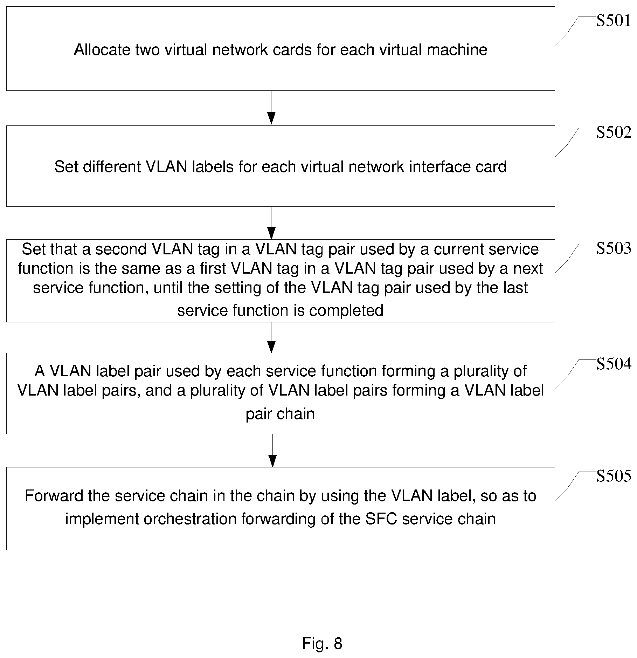

Fig. 8 is a schematic flowchart of a data forwarding processing in an SR-IOV network adapter according to an embodiment of the present disclosure. As shown in Fig. 8, the data forwarding processing flow may include the following steps.

S601, set a Trunk working mode of a physical port in the SR-IOV network adapter.

In this step, the Trunk mode allows receiving and sending packet data using a plurality of VLANs.

S602, packet data with a VLAN label is received from a first physical port.

In this step, the SR-IOV network adapter may be connected to an incoming service chain classifier by using a first physical port.

S603, according to the VLAN label of the packet, use the switch in the SR-IOV network adapter to forward packet data. If the packet data is an incoming data traffic packet, S604 is performed. If the message is an outgoing data traffic message.

In this step, the inbound data traffic packet indicates a packet that enters the SR-IOV network adapter, and the outbound data traffic packet indicates a packet that is forwarded from the SR-IOV network adapter.

S604, forward the incoming data traffic packet to a VF network card with the same VLAN label according to the carried VLAN label, and send the incoming data traffic to a VM virtual machine of the first service function through the virtual network card.

S605, the virtual network adapter of the VM virtual machine that has the last service function and carries the VLAN label packet is forwarded to the second physical port of the SR-IOV.

In this step, the SR-IOV network adapter may be connected to the outgoing service chain classifier by using the second physical port.

In some application scenarios, an actual device for implementing a service chain forwarding function may be a physical switch or a virtual switch. The virtual switch may be, for example, a virtual switch based on the OpenvSwitch (OVS). When a physical switch is directly used to implement service chain forwarding, costs and networking complexity are increased, and when a virtual switch is used to implement service chain forwarding, forwarding performance often hardly meets a requirement.

In the service chain forwarding solution in the embodiments of the present disclosure, the SR-IOV network adapter may include a switch based on a data link layer and a plurality of virtual network adapters, where each virtual network adapter may be set with a specified VLAN tag, and the VF network adapter corresponds to the set VLAN. Using a switch built in an SR-IOV network adapter to forward data of inbound data traffic packets and outbound data of the data traffic packets through a physical port, and to forward data between VF network adapters through a virtual port, the SR-IOV network adapter can improve the forwarding efficiency of the packet data, reduce the transmission delay and resource consumption of the data packets, and achieve good forwarding performance.

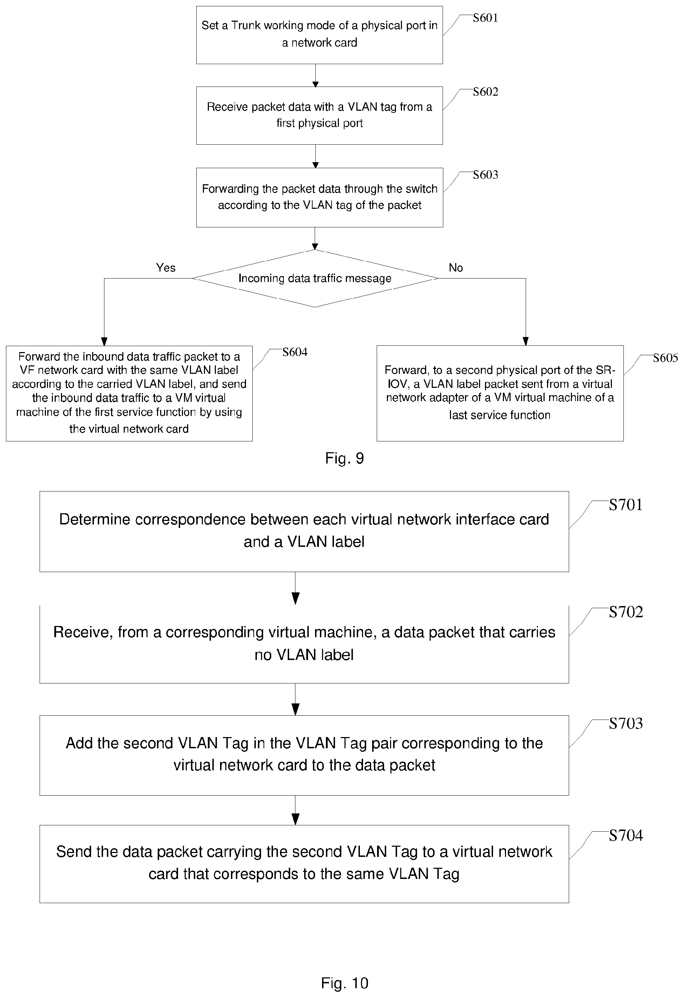

Fig. 9 is a flowchart of forwarding packet data according to an embodiment of the present invention. As shown in Fig. 9, the process of forwarding the packet data may include the following steps.

S701, determine correspondence between each virtual network interface card and a VLAN label.

S702, receive, from a corresponding virtual machine, a data packet that carries no VLAN label.

S703, add the second VLAN Tag in the VLAN Tag pair corresponding to the virtual network card to the data packet.

S704, send the data packet carrying the second VLAN Tag to a virtual network card that corresponds to the same VLAN Tag.

In this step, the switch in the SR-IOV network adapter may be used to send the packet data. By means of steps S701 to S703, forwarding of a data packet from a virtual network interface card of one virtual machine to a virtual network interface card of another virtual machine is implemented in an SR-IOV network interface card.

Fig. 10 is a schematic flowchart of forwarding packet data according to another embodiment. As shown in Fig. 10, the process of forwarding the packet data may include the following steps.

S801, determine correspondence between each virtual network interface card and a VLAN label.

S802, the virtual network adapter receives a data packet that carries a VLAN label and is forwarded by the switch.

S803, the carried VLAN label is deleted to restore the original customer data message, and the restored original customer data message is forwarded to the corresponding virtual machine.

Through steps S801 to S802, data forwarding from the virtual network interface card to a corresponding virtual machine is implemented in the SR-IOV network interface card.

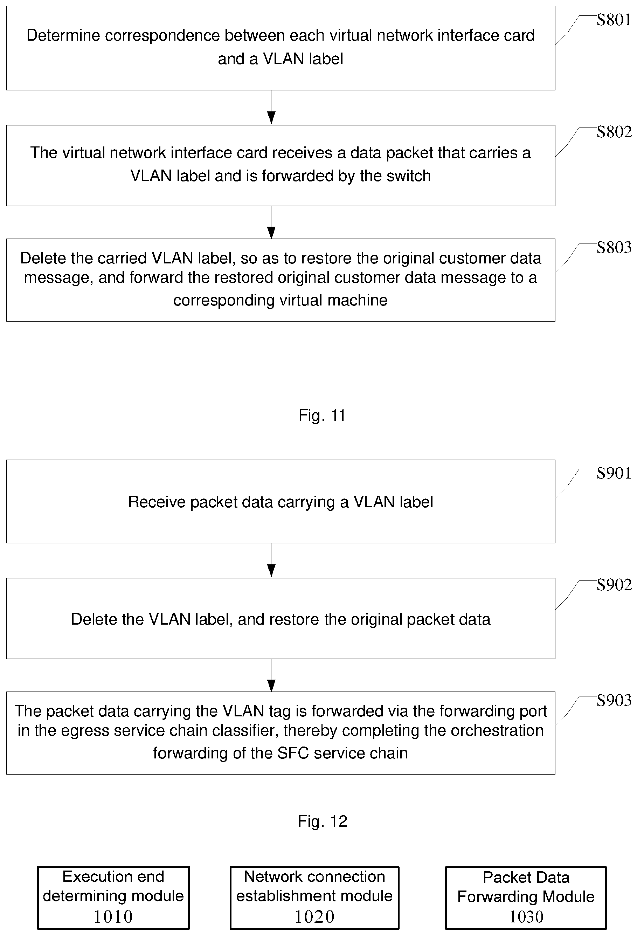

Fig. 11 is a schematic flowchart of a procedure of processing an egress service chain classifier according to an embodiment of the present disclosure. As shown in Fig. 11, the packet data processing process in the egress service chain classifier includes the following steps.

S901, packet data carrying a VLAN label is received.

In this step, the VLAN label is carried to identify the corresponding service chain.

S902, delete the VLAN label, and restore the original packet data.

S903, the packet data carrying the VLAN label is forwarded via the forwarding port in the outlet service chain classifier, thereby completing the orchestration forwarding of the SFC service chain.

In this embodiment, an SR-IOV network adapter forwards a packet carrying a VLAN tag to an outgoing service chain classifier, and the outgoing service chain classifier deletes the VLAN tag carried in the packet to obtain an original data packet and forwards data according to the original data packet, thereby implementing orchestration forwarding of a service chain.

Embodiments of the present disclosure provide a service chain orchestration method. A virtual network card using an SR-IOV technology is used to implement a forwarding function of a service chain, so that cost is saved and data forwarding efficiency can be improved.

The following describes a data forwarder according to an embodiment of the present disclosure in detail with reference to the accompanying drawings. Fig. 12 shows a schematic structural diagram of a data forwarder according to an embodiment of the present disclosure. As shown in Fig. 12, the data forwarder may include the following modules.

The execution end determining module 1010 is configured to determine, according to one or more service functions corresponding to packet data, a service execution end corresponding to each service function.

The network connection establishment module 1020, configure to establish a network connection with each service execution end, wherein the established network connection is used for performing data interaction with the corresponding service execution end, and the network connection established for each service execution end is a virtual network connection established based on a same physical network card.

The packet data forwarding module 1030, configured to forward based on a predetermined service function processing sequence, the packet data to each service execution end through the network connection established for each service execution end.

In an embodiment, the network connections established for each service execution end include a first network connection and a second network connection.

In one embodiment, the packet data forwarding module 1030 may specifically comprise: a data sending unit, configured to determine a current service function to be executed on packet data, and send the packet data to a port of a first network connection of a service execution end corresponding to the current service function.

A data receiving unit, configured to receive, through a port connected to a second network of a service execution terminal corresponding to a current service function, packet data for which the current service function has been executed.

A service function obtaining unit, configured to use a next service function obtained according to a service function processing sequence as a current service function to be executed according to packet data, until the number of packet data sent is equal to the number of service functions.

In one embodiment, the data sending unit can further specifically comprise: a label setting subunit, configured to set different tag information for two network connections of each service execution end, and setting the second network connection of the service execution end corresponding to the current service function and the first network connection of the service execution end corresponding to the next service function to have the same label information; a current service function determination subunit for determining, according to the label information carried in the packet data, the current service function to be executed on the packet data, wherein the label information of the first network connection of the service execution end corresponding to the current service function is the same as the label information carried in the packet data; the data sending unit is further specifically configured to send the packet data to the port of the first network connection of the service execution end corresponding to the current service function.

In one embodiment, the packet data carries label information. In this embodiment, the data sending unit is further specifically configured to delete, at the port connected to the first network, the label information carried in the packet data; sending the packet data from which the tag information has been deleted to a service execution end corresponding to the current service function.

In one embodiment, each network connection is provided with tag information. The data receiving unit is further configured to add, at a port connected to a second network, label information to the packet data on which the current service function is executed, where the added label information is the same as label information about a first network connection of a service execution end corresponding to a next service function.

In one embodiment, the data receiving unit, when adding the tag information to the packet data of which the current service function has been executed, is specifically used for adding the tag information to a specified position of a message header of the packet data based on a specified virtual local area network protocol.

According to the data forwarder in the embodiments of the present disclosure, by using a same physical network adapter and by using a virtualization technology, a virtual network connection is established with each service execution end of a plurality of service execution ends, so that an input/output channel of a corresponding service execution end can be directly established, thereby improving forwarding efficiency of a virtual server. The networking is simple, and a networking cost is reduced

It should be understood that the present disclosure is not limited to the particular arrangements and processes described in the embodiments above and shown in the figures. For convenience and brevity of description, a detailed description of a known method is omitted herein, and for a specific working process of the foregoing system, module, and unit, reference may be made to a corresponding process in the foregoing method embodiments, and details are not described herein again.

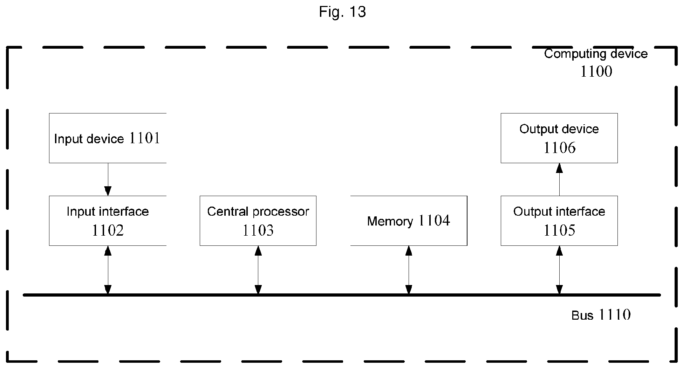

Fig. 13 is a structural diagram illustrating an exemplary hardware architecture of a computing device capable of implementing the data forwarding method and apparatus according to an embodiment of the present disclosure.

As shown in Fig. 13, computing device 1100 includes an input device 1101, an input interface 1102, a central processing unit 1103, a memory 1104, an output interface 1105, and an output device 1106. The input interface 1102, the central processing unit 1103, the memory 1104, and the output interface 1105 are connected to each other through a bus 1110. The input device 1101 and the output device 1106 are connected to the bus 1110 through the input interface 1102 and the output interface 1105, respectively, and are further connected to other components of the computing device 1100.

Specifically, the input device 1101 receives input information from outside (for example, an ingress classifier), and transmits the input information to the central processing unit 1103 through the input interface 1102; a central processing unit 1103 processes input information based on a computer executable instruction stored in a memory 1104 so as to generate output information, and temporarily or permanently stores the output information in the memory 1104, and then transmits the output information to an output device 1106 via an output interface 1105; the output device 1106 outputs the output information to the exterior of the computing device 1100 for use by a user.

In one embodiment, the computing device 1100 shown in Fig. 13 may be implemented as a data forwarding server, which may comprise: a memory configured to store a program; and a processor configured to run the program stored in the memory to execute the data forwarding method described in the foregoing embodiment.

Embodiments of the present disclosure further provide a data forwarding system, comprising: an ingress classifier, configured to determine one or more service functions corresponding to packet data, and add label information for identifying a corresponding service function to the packet data; a data forwarder, configured to receive packet data and execute the data forwarding method described in the foregoing embodiment to obtain packet data of a last service function in service functions, where the packet data of the last service function carries label information used to identify a corresponding service function; the egress classifier is configured to receive the packet data for which a lastservice function of the one or more service functions has been executed, and delete the carried label information.

In an embodiment, the ingress classifier is connected to the data forwarder, and the data forwarder is connected to the egress classifier by using a specified physical port.

It should be understood that the data forwarding system in the embodiments of the present disclosure is not limited to the specific configuration and processing described in the above embodiments and shown in the drawings. For convenience and brevity of description, a detailed description of a known method is omitted here. In some embodiments, the ingress classifier, the data forwarder, and the egress classifier in the data forwarding system keep consistent with the specific working processes of the ingress service chain classifier, the service chain forwarder, and the egress service chain classifier in the data forwarding method described in the foregoing with reference to Fig. 2 to Fig. 11. Reference may be made to the corresponding processes in the foregoing method embodiments, and details are not described herein again.

In accordance with embodiments of the present disclosure, the processes described above with reference to the flowcharts can be implemented as computer software programs. For example, embodiments of the present disclosure include a computer program product comprising a computer program tangibly embodied on a machine-readable medium, the computer program including a program code for performing the method shown in the flowchart. In such embodiments, the computer program may be downloaded and installed from a network and/or installed from a removable storage medium.

According to the data forwarding method, the forwarder, the system, the server, and the storage medium in the embodiments of the present disclosure, by using a virtualization technology, a virtual network connection can be established by using one physical network adapter and each service execution end of a plurality of service execution ends, so that an input/output channel with a corresponding service execution end can be directly established, thereby improving forwarding efficiency of a virtual server, simplifying networking, and reducing networking costs.

Those of ordinary skill in the art can appreciate that the functional blocks/units in all or some of the steps, systems, and apparatuses of the methods disclosed above can be implemented as software, firmware, hardware, and any suitable combination thereof. In a hardware implementation, the division between functional modules/units referred to in the above description does not necessarily correspond to the division of physical components; for example, one physical component may have multiple functions, or one function or step may be cooperatively performed by several physical components. Some or all of the physical components may be implemented as software executed by a processor, such as a central processor, digital signal processor, or microprocessor, or as hardware, or as an integrated circuit, such as an application specific integrated circuit. Such software may be distributed on computer-readable media, which may include computer storage media (or non-transitory media) and communication media (or transitory media). As is well known to those of ordinary skill in the art, the term computer storage media includes both volatile and nonvolatile, removable and non-removable media implemented in any method or technology for storage of information such as computer readable instructions, data structures, program modules, or other data. Computer storage media includes, but is not limited to, RAM, ROM, EEPROM, flash memory or other memory technology, CD-ROM, digital versatile discs (DVD) or other optical disk storage, magnetic cassettes, magnetic tape, magnetic disk storage or other magnetic storage devices, or any other medium which can be used to store the desired information and which can be accessed by a computer. In addition, communication media typically embodies computer readable instructions, data structures, program modules, or other data in a modulated data signal such as a carrier wave or other transport mechanism and may include any information delivery media as is known to those of ordinary skill in the art.

It should be understood that the above embodiments are only exemplary embodiments for illustrating the principle of the present disclosure, but the present disclosure is not limited thereto.

## Claims

1. A data forwarding method, comprising:
determining, according to one or more service functions corresponding to packet data, a service execution end corresponding to each service function (S110);
establishing a network connection with each service execution end, wherein the established network connection is used for performing data interaction with the corresponding service execution end, and the network connection established for each service execution end is a virtual network connection established based on a same physical network card (S120); and
forwarding, based on a predetermined service function processing sequence, the packet data to each service execution end through the network connection established for each service execution end(S130);
wherein the network connection established for each service execution end comprises a first network connection and a second network connection; and forwarding, based on the predetermined service function processing sequence, the packet data to each service execution end through the network connection established for each service execution end is **characterized by** comprising:
determining a current service function to be executed on the packet data, and sending the packet data to a port of the first network connection of the service execution end corresponding to the current service function;
receiving, through a port of the second network connection of the service execution end corresponding to the current service function, packet data for which the current service function has been executed; and
determining a next service function acquired according to the service function processing sequence as a current service function to be executed on the packet data, until the number of times of sending the packet data is equal to the number of the one or more service functions.

2. The method according to claim 1, wherein the packet data carries label information, and determining the current service function to be executed on the packet data, and sending the packet data to the port of the first network connection of the service execution end corresponding to the current service function comprise:
setting different tag information for two network connections of each service execution end, and setting the second network connection of the service execution end corresponding to the current service function and the first network connection of the service execution end corresponding to the next service function to have the same label information;
determining, according to the label information carried in the packet data, the current service function to be executed on the packet data, wherein the label information of the first network connection of the service execution end corresponding to the current service function is the same as the label information carried in the packet data; and
sending the packet data to the port of the first network connection of the service execution end corresponding to the current service function.

3. The method according to claim 1, wherein the packet data carries label information, and after sending the packet data to the port of the first network connection of the service execution end corresponding to the current service function, the method further comprises:
deleting, at the port of the first network connection, the label information carried in the packet data; and
sending the packet data, in which the label information has been deleted, to the service execution end corresponding to the current service function.

4. The method according to claim 1, wherein each network connection is provided with label information, and after receiving, through the port of the second network connection of the service execution end corresponding to the current service function, the packet data for which the current service function has been executed, the method further comprises:
adding, at the port of the second network connection, label information to the packet data for which the current service function has been executed, wherein the added label information is the same as label information of the first network connection of the service execution end corresponding to the next service function.

5. The method according to claim 4, wherein adding the label information to the packet data for which the current service function has been executed comprises:
adding the label information to a specified location of a packet header of the packet data based on a specified VLAN protocol.

6. A data forwarder, comprising:
an execution end determining module (S1010), configured to determine, according to one or more service functions corresponding to packet data, a service execution end corresponding to each service function;
a network connection establishment module(S1020), configure to establish a network connection with each service execution end, wherein the established network connection is used for performing data interaction with the corresponding service execution end, and the network connection established for each service execution end is a virtual network connection established based on a same physical network card;
and a packet data forwarding module(S1030), configured to forward based on a predetermined service function processing sequence, the packet data to each service execution end through the network connection established for each service execution end wherein the network connection established for each service execution end is **characterized by** comprising a first
network connection and a second network connection; the packet data forwarding module, configured to determining a current service function to be executed on the packet data, and sending the packet data to a port of the first network connection of the service execution end corresponding to the current service function; receiving, through a port of the second network connection of the service execution end corresponding to the current service function, packet data for which the current service function has been executed; and determining a next service function acquired according to the service function processing sequence as a current service function to be executed on the packet data, until the number of times of sending the packet data is equal to the number of the one or more service functions.

7. A data forwarding system, comprising:
an ingress classifier, configured to determine one or more service functions corresponding to packet data, and add label information for identifying the one or more service functions to the packet data;
a data forwarder, configured to receive the packet data and execute the data forwarding method according to any one of claims 1 to 6 to obtain the packet data for which a last service function of the one or more service functions has been executed, wherein the packet data for which the last service function has been executed carries label information for identifying the corresponding service function; and
an egress classifier, configured to receive the packet data for which a last service function of the one or more service functions has been executed, and delete the carried label information;
wherein the network connection established for each service execution end comprises a first network connection and a second network connection; the egress classifier, configured to determining a current service function to be executed on the packet data, and sending the packet data to a port of the first network connection of the service execution end corresponding to the current service function; receiving, through a port of the second network connection of the service execution end corresponding to the current service function, packet data for which the current service function has been executed; and determining a next service function acquired according to the service function processing sequence as a current service function to be executed on the packet data, until the number of times of sending the packet data is equal to the number of the one or more service functions.

8. The data forwarding system according to claim 7, wherein
the ingress classifier is connected to the data forwarder by using a specified physical port, and the data forwarder is connected to the egress classifier by using a specified physical port.

9. A data forwarding server, comprising a memory and a processor;
the memory is configured to store executable program code; and
the processor is configured to read the executable program code stored in the memory to execute all the steps of the data forwarding method according to any one of claims 1 to 5.

10. A computer readable storage medium, wherein the computer readable storage medium comprises instructions, and the instructions, when running on a computer, cause the computer to execute all the steps of the data forwarding method according to any one of claims 1 to 5.

## Patentansprüche

1. Verfahren zur Weiterleitung von Daten, umfassend:
Bestimmen, nach einer oder mehreren Dienstfunktionen, die den Paketdaten entsprechen, einer Dienstdurchführungsende, das jeder Dienstfunktion entspricht;
Herstellen einer Netzwerkverbindung mit jedem Dienstdurchführungsende, wobei die hergestellte Netzwerkverbindung zur Durchführung einer Dateninteraktion mit der entsprechenden Dienstdurchführungsende verwendet wird, und wobei die für jede Dienstdurchführungsende hergestellte Netzwerkverbindung eine virtuelle Netzwerkverbindung ist, die auf derselben physischen Netzwerkkarte (S120) basiert; und
Weiterleiten, nach einer vorbestimmten Dienstfunktion-Verarbeitungssequenz, der Paketdaten an jede Dienstdurchführungsende über die Netzwerkverbindung, die für jede Dienstdurchführungsende (S130) hergestellt wird;
wobei die Netzwerkverbindung, die für jede Dienstdurchführungsende hergestellt wird, eine erste Netzwerkverbindung und eine zweite Netzwerkverbindung umfasst; und Weiterleiten, nach der vorbestimmten Dienstfunktion-Verarbeitungssequenz, der Paketdaten an jedem Dienstdurchführungsende über die Netzwerkverbindung, die für jede Dienstdurchführungsende hergestellt wird, **dadurch gekennzeichnet ist, dass** es umfasst:
Bestimmen einer aktuellen Dienstfunktion, die auf den Paketdaten durchzuführen ist, und Senden der Paketdaten an einen Port der ersten Netzwerkverbindung der Dienstdurchführungsende, das der aktuellen Dienstfunktion entspricht;
Empfangen, über einen Port der zweiten Netzwerkverbindung des Dienstdurchführungsende, das der aktuellen Dienstfunktion entspricht, der Paketdaten, für die die aktuelle Dienstfunktion durchgeführt wurde, und
Bestimmen einer nächsten Dienstfunktion, die nach der Dienstfunktion-Verarbeitungssequenz erfasst wurde, als aktuelle Dienstfunktion, die auf den Paketdaten durchzuführen ist, bis die Anzahl der Sendungen der Paketdaten der Anzahl der einen oder mehreren Dienstfunktionen gleich ist.

2. Verfahren nach Anspruch 1, wobei die Paketdaten Etiketteninformationen tragen, und Bestimmen der aktuellen Dienstfunktion, die auf den Paketdaten durchzuführen ist, und Senden der Paketdaten an den Port der ersten Netzwerkverbindung des Dienstdurchführungsende, das der aktuellen Dienstfunktion entspricht, umfassen:
Einstellen verschiedener Tag-Informationen für zwei Netzwerkverbindungen jeder Dienstdurchführungsende und Einstellen der zweiten Netzwerkverbindung der Dienstdurchführungsende, das der aktuellen Dienstfunktion entspricht, und die erste Netzwerkverbindung der Dienstdurchführungsende, das der nächsten Dienstfunktion entspricht, sodass sie dieselbe Etiketteninformationen aufweisen;
Bestimmen, nach den in den Paketdaten getragenen Etiketteninformationen, der aktuellen Dienstfunktion, die auf den Paketdaten durchzuführen ist, wobei die Etiketteninformationen der ersten Netzwerkverbindung des Dienstdurchführungsende, das der aktuellen Dienstfunktion entspricht, der in den Paketdaten getragenen Etiketteninformationen gleich sind; und
Senden der Paketdaten an den Port der ersten Netzwerkverbindung der Dienstdurchführungsende, das der aktuellen Dienstfunktion entspricht.

3. Verfahren nach Anspruch 1, wobei die Paketdaten Etiketteninformationen tragen, und das Verfahren, nach dem Senden der Paketdaten an den Port der ersten Netzwerkverbindung des Dienstdurchführungsende, das der aktuellen Dienstfunktion entspricht, ferner umfasst:
Löschen, an dem Port der ersten Netzwerkverbindung, der Etiketteninformationen, die in den Paketdaten getragen werden; und
Senden der Paketdaten, bei denen die Etiketteninformationen gelöscht wurden, an dem Dienstdurchführungsende, das der aktuellen Dienstfunktion entspricht.

4. Verfahren nach Anspruch 1, wobei jede Netzwerkverbindung mit Etiketteninformationen versehen ist, und das Verfahren, nach dem Empfangen der Paketdaten, für die die aktuelle Dienstfunktion durchgeführt wurde, über den Port der zweiten Netzwerkverbindung des Dienstdurchführungsende, das der aktuellen Dienstfunktion entspricht, ferner umfasst:
Hinzufügen Etiketteninformationen zu den Paketdaten, für die die aktuelle Dienstfunktion durchgeführt wurde, an dem Port der zweiten Netzwerkverbindung, wobei die hinzugefügten Etiketteninformationen den Etiketteninformationen der ersten Netzwerkverbindung des Dienstdurchführungsende, das der nächsten Dienstfunktion entspricht, gleich sind.

5. Verfahren nach Anspruch 4, wobei Hinzufügen der Etiketteninformationen zu den Paketdaten, für die die aktuelle Dienstfunktion durchgeführt wurde, umfasst:
Hinzufügen der Etiketteninformationen an einer spezifizierten Position eines Paket-Header der Paketdaten nach einem spezifizierten VLAN-Protokoll.

6. Datenweiterleitungsgerät, umfassend:
ein Durchführungsende-Bestimmungsmodul, das dazu konfiguriert ist, nach einer oder mehreren Dienstfunktionen, die den Paketdaten entsprechen, ein Dienstdurchführungsende, das jeder Dienstfunktion entspricht, zu bestimmen;
ein Netzwerkverbindungsherstellungsmodul, das dazu konfiguriert ist, eine Netzwerkverbindung mit jedem Dienstdurchführungsende herzustellen, wobei die hergestellte Netzwerkverbindung zur Durchführung einer Dateninteraktion mit dem entsprechenden Dienstdurchführungsende verwendet wird, und wobei die Netzwerkverbindung, die für jedes Dienstdurchführungsende hergestellt wird, eine virtuelle Netzwerkverbindung ist, die auf derselben physischen Netzwerkkarte basiert;
und ein Paketdaten-Weiterleitungsmodul, das dazu konfiguriert ist, nach einer vorbestimmten Dienstfunktion-Verarbeitungssequenz, Paketdaten an jedes Dienstdurchführungsende über die Netzwerkverbindung, die für jedes Dienstdurchführungsende hergestellt wird, weiterzuleiten;
wobei die Netzwerkverbindung, die für jedes Dienstdurchführungsende hergestellt wird, gekennzeichnet ist, dass die eine erste Netzwerkverbindung und eine zweite Netzwerkverbindung umfasst; wobei das Paketdaten-Weiterleitungsmodul ferner dazu konfiguriert ist, eine aktuelle Dienstfunktion, die auf den Paketdaten durchzuführen ist, zu bestimmen und die Paketdaten an einen Port der ersten Netzwerkverbindung des Dienstdurchführungsende, das der aktuellen Dienstfunktion entspricht, zu senden; die Paketdaten, für die die aktuelle Dienstfunktion durchgeführt wurde, über einen Port der zweiten Netzwerkverbindung des Dienstdurchführungsende, das der aktuellen Dienstfunktion entspricht, zu empfangen; und eine nächste Dienstfunktion, die nach der Dienstfunktion-Verarbeitungssequenz erfasst wurde, als aktuelle Dienstfunktion, die auf den Paketdaten durchzuführen ist, bis die Anzahl der Sendungen der Paketdaten der Anzahl der einen oder mehreren Dienstfunktionen entspricht.

7. Datenweiterleitungssystem, umfassend:
einen Zugang-Klassifikator, der dazu konfiguriert ist, eine oder mehrere Dienstfunktionen, die den Paketdaten entsprechen, zu bestimmen und Etiketteninformationen zur Identifizierung der einen oder mehreren Dienstfunktionen zu den Paketdaten hinzuzufügen;
ein Datenweiterleitungsgerät, das dazu konfiguriert ist, die Paketdaten zu empfangen und dass Datenweiterleitungsverfahrens nach einem der Ansprüche 1 bis 6 durchzuführen, um die Paketdaten zu erhalten, für die eine letzte Dienstfunktion der einen oder mehreren Dienstfunktionen durchgeführt wurde, wobei die Paketdaten, für die die letzte Dienstfunktion durchgeführt wurde, Etiketteninformationen zur Identifizierung der entsprechenden Dienstfunktion tragen; und
einen Austritt-Klassifikator, der dazu konfiguriert ist, die Paketdaten, für die eine letzte Dienstfunktion der einen oder mehreren Dienstfunktionen durchgeführt wurde, zu empfangen und die getragenen Etiketteninformationen zu löschen;
wobei die Netzwerkverbindung, die für jedes Dienstdurchführungsende hergestellt wird, eine erste Netzwerkverbindung und eine zweite Netzwerkverbindung umfasst; der Austritt-Klassifikator dazu konfiguriert ist, eine aktuelle Dienstfunktion, die auf den Paketdaten durchzuführen ist, zu bestimmen und die Paketdaten an einen Port der ersten Netzwerkverbindung des Dienstdurchführungsende, das der aktuellen Dienstfunktion entspricht, zu senden; die Paketdaten, für die die aktuelle Dienstfunktion durchgeführt wurde, über einen Port der zweiten Netzwerkverbindung des Dienstdurchführungsende, das der aktuellen Dienstfunktion entspricht, zu empfangen; und eine nächste Dienstfunktion, die nach der Dienstfunktion-Verarbeitungssequenz erfasst wurde, als aktuelle Dienstfunktion, die auf den Paketdaten durchzuführen ist, bis die Anzahl der Sendungen der Paketdaten der Anzahl der einen oder mehreren Dienstfunktionen entspricht, zu bestimmen.

8. Das Datenweiterleitungssystem nach Anspruch 7, wobei
der Zugang-Klassifikator durch Verwenden eines spezifizierten physischen Ports mit dem Datenweiterleitungsgerät verbunden ist, und das Datenweiterleitungsgerät durch Verwenden eines spezifizierten physischen Ports mit dem Austritt-Klassifikator verbunden ist.

9. Datenweiterleitungsserver, umfassend einen Speicher und einen Prozessor; wobei
der Speicher dazu konfiguriert ist, ausführbaren Programmcodes zu speichern; und
der Prozessor dazu konfiguriert ist, das ausführbare Programmcode, das in dem Speicher gespeichert wird, zu lesen, um das Datenweiterleitungsverfahren nach einem der Ansprüche 1 bis 5 auszuführen.

10. Computerlesbares Speichermedium, wobei das computerlesbare Speichermedium Anweisungen umfasst, wobei die Anweisungen, wenn sie auf einem Computer ausgeführt werden, bewirken, dass der Computer alle Schritte des Datenweiterleitungsverfahrens nach einem der Ansprüche 1 bis 5 ausführt.

## Revendications

1. Procédé de transfert de données, comprenant :
déterminer, selon une ou plusieurs fonctions de service correspondant à des données de paquets, une extrémité d'exécution de service correspondant à chaque fonction de service (S110) ;
établir une connexion réseau avec chaque extrémité d'exécution de service, et dans lequel la connexion réseau établie est utilisée pour effectuer une interaction de données avec l'extrémité d'exécution de service correspondante, et la connexion réseau établie pour chaque extrémité d'exécution de service est une connexion réseau virtuelle établie sur la base d'une même carte réseau physique (S210); et
transférer, sur la base d'une séquence de traitement de fonctions de service prédéfinie, les données de paquets à chaque extrémité d'exécution de service par l'intermédiaire de la connexion réseau établie pour chaque extrémité d'exécution de service (S130);
dans lequel la connexion réseau établie pour chaque extrémité d'exécution de service comprend une première connexion réseau et une seconde connexion réseau ; et le transfert, basé sur la séquence de traitement de fonctions de service prédéfinie, des données de paquets à chaque extrémité d'exécution de service par l'intermédiaire de la connexion réseau établie pour chaque extrémité d'exécution de service est **caractérisé par** le fait de comprendre :
déterminer une fonction de service actuelle devant être exécutée sur les données de paquets, et envoyer les données de paquets à un port de la première connexion réseau de l'extrémité d'exécution de service correspondant à la fonction de service actuelle ;
recevoir, par l'intermédiaire d'un port de la seconde connexion réseau de l'extrémité d'exécution de service correspondant à la fonction de service actuelle, les données de paquets pour lesquelles la fonction de service actuelle a été exécutée ; et
déterminer une fonction de service suivante, obtenue selon la séquence de traitement de fonctions de service, comme fonction de service actuelle devant être exécutée sur les données de paquets, jusqu'à ce que le nombre de fois d'envoi des données de paquets soit égal au nombre desdites fonctions de service.

2. Le procédé selon la revendication 1, dans lequel les données de paquets portent une information d'étiquette, et dans lequel la détermination de la fonction de service actuelle devant être exécutée sur les données de paquets, et l'envoi des données de paquets au port de la première connexion réseau de l'extrémité d'exécution de service correspondant à la fonction de service actuelle comprennent :
définir une information d'étiquette différente pour deux connexions réseau de chaque extrémité d'exécution de service, et définir la seconde connexion réseau de l'extrémité d'exécution de service correspondant à la fonction de service actuelle et la première connexion réseau de l'extrémité d'exécution de service correspondant à la fonction de service suivante pour avoir la même information d'étiquette ;
déterminer, selon l'information d'étiquette portée dans les données de paquets, la fonction de service actuelle devant être exécutée sur les données de paquets, l'information d'étiquette de la première connexion réseau de l'extrémité d'exécution de service correspondant à la fonction de service actuelle étant identique à l'information d'étiquette portée dans les données de paquets ; et
envoyer les données de paquets au port de la première connexion réseau de l'extrémité d'exécution de service correspondant à la fonction de service actuelle.

3. Le procédé selon la revendication 1, dans lequel les données de paquets portent une information d'étiquette, et, après l'envoi des données de paquets au port de la première connexion réseau de l'extrémité d'exécution de service correspondant à la fonction de service actuelle, le procédé comprend en outre :
supprimer, au niveau du port de la première connexion réseau, l'information d'étiquette portée dans les données de paquets ; et
envoyer les données de paquets, dans lesquelles l'information d'étiquette a été supprimée, à l'extrémité d'exécution de service correspondant à la fonction de service actuelle.

4. Le procédé selon la revendication 1, dans lequel chaque connexion réseau est pourvue d'une information d'étiquette, et, après la réception, par le port de la seconde connexion réseau de l'extrémité d'exécution de service correspondant à la fonction de service actuelle, des données de paquets pour lesquelles la fonction de service actuelle a été exécutée, le procédé comprend en outre :
ajouter, au niveau du port de la seconde connexion réseau, une information d'étiquette aux données de paquets pour lesquelles la fonction de service actuelle a été exécutée, l'information d'étiquette ajoutée étant identique à l'information d'étiquette de la première connexion réseau de l'extrémité d'exécution de service correspondant à la fonction de service suivante.

5. Le procédé selon la revendication 4, dans lequel l'ajout de l'information d'étiquette aux données de paquets pour lesquelles la fonction de service actuelle a été exécutée comprend :
ajouter l'information d'étiquette à un emplacement spécifié d'un en-tête de paquet des données de paquets sur la base d'un protocole VLAN spécifié.

6. Un dispositif de transfert de données, comprenant :
un module de détermination d'extrémité d'exécution (S1010), configuré pour déterminer, selon une ou plusieurs fonctions de service correspondant à des données de paquets, une extrémité d'exécution de service correspondant à chaque fonction de service ;
un module d'établissement de connexion réseau (S1020), configuré pour établir une connexion réseau avec chaque extrémité d'exécution de service, la connexion réseau établie étant utilisée pour effectuer une interaction de données avec l'extrémité d'exécution de service correspondante, et la connexion réseau établie pour chaque extrémité d'exécution de service étant une connexion réseau virtuelle établie sur la base d'une même carte réseau physique ;
et un module de transfert de données de paquets (S1030), configuré pour transférer, sur la base d'une séquence de traitement de fonctions de service prédéfinie, les données de paquets à chaque extrémité d'exécution de service par l'intermédiaire de la connexion réseau établie pour chaque extrémité d'exécution de service ;
dans lequel la connexion réseau établie pour chaque extrémité d'exécution de service est **caractérisée par** le fait de comprendre une première connexion réseau et une seconde connexion réseau ; le module de transfert de données de paquets étant configuré pour déterminer une fonction de service actuelle devant être exécutée sur les données de paquets, et envoyer les données de paquets à un port de la première connexion réseau de l'extrémité d'exécution de service correspondant à la fonction de service actuelle ; recevoir, par un port de la seconde connexion réseau de l'extrémité d'exécution de service correspondant à la fonction de service actuelle, les données de paquets pour lesquelles la fonction de service actuelle a été exécutée ; et déterminer une fonction de service suivante, obtenue selon la séquence de traitement de fonctions de service, comme fonction de service actuelle devant être exécutée sur les données de paquets, jusqu'à ce que le nombre de fois d'envoi des données de paquets soit égal au nombre desdites fonctions de service.

7. Système de transfert de données, comprenant :
un classificateur d'entrée, configuré pour déterminer une ou plusieurs fonctions de service correspondant à des données de paquets, et ajouter une information d'étiquette pour identifier lesdites fonctions de service aux données de paquets ;
un dispositif de transfert de données, configuré pour recevoir les données de paquets et exécuter le procédé de transfert de données selon l'une quelconque des revendications 1 à 6 pour obtenir les données de paquets pour lesquelles une dernière fonction de service parmi lesdites fonctions de service a été exécutée, les données de paquets pour lesquelles la dernière fonction de service a été exécutée portant une information d'étiquette pour identifier la fonction de service correspondante ; et
un classificateur de sortie, configuré pour recevoir les données de paquets pour lesquelles une dernière fonction de service parmi lesdites fonctions de service a été exécutée, et supprimer l'information d'étiquette portée ;
la connexion réseau établie pour chaque extrémité d'exécution de service comprenant une première connexion réseau et une seconde connexion réseau ; le classificateur de sortie étant configuré pour déterminer une fonction de service actuelle devant être exécutée sur les données de paquets, et envoyer les données de paquets à un port de la première connexion réseau de l'extrémité d'exécution de service correspondant à la fonction de service actuelle ; recevoir, par un port de la seconde connexion réseau de l'extrémité d'exécution de service correspondant à la fonction de service actuelle, les données de paquets pour lesquelles la fonction de service actuelle a été exécutée ; et déterminer une fonction de service suivante, obtenue selon la séquence de traitement de fonctions de service, comme fonction de service actuelle devant être exécutée sur les données de paquets, jusqu'à ce que le nombre de fois d'envoi des données de paquets soit égal au nombre desdites fonctions de service.

8. Le système de transfert de données selon la revendication 7, dans lequel
le classificateur d'entrée est connecté au dispositif de transfert de données à l'aide d'un port physique spécifié, et le dispositif de transfert de données est connecté au classificateur de sortie à l'aide d'un port physique spécifié.

9. Serveur de transfert de données, comprenant une mémoire et un processeur ;
la mémoire étant configurée pour stocker un code de programme exécutable ; et
le processeur étant configuré pour lire le code de programme exécutable stocké dans la mémoire afin d'exécuter le procédé de transfert de données selon l'une quelconque des revendications 1 à 5.

10. Support d'enregistrement lisible par ordinateur, ledit support d'enregistrement comprenant des instructions, les instructions, lorsqu'elles sont exécutées sur un ordinateur, amenant l'ordinateur à exécuter toutes les étapes du procédé de transfert de données selon l'une quelconque des revendications 1 à 5.
